# EUROPÄISCHE PATENTSCHRIFT

(11) **EP 0 783 087 B1**
(45) Veröffentlichungstag und Bekanntmachung des Hinweises auf die Patenterteilung: **31.01.2001**
(21) Anmeldenummer: 96119731.6
(22) Anmeldetag: 10.12.1996
(51) Int. Cl.: F16L 47/06

(54) **Vorrichtung zum Abdichten der radialen Fuge zwischen zwei koaxial ineinander gesteckten Rohren**
Radial joint sealing assembly between two concentric pipes
Assemblage d'étanchement du joint radial entre deux tuyaux coaxiaux

(30) Priorität: 05.01.1996 DE 19600261
(43) Veröffentlichungstag der Anmeldung: 09.07.1997
(73) Patentinhaber: MANIBS Spezialarmaturen GmbH & Co. KG, D-42859 Remscheid (DE)
(72) Erfinder: Schafstein, Jürgen, 42859 Remscheid (DE)
(74) Vertreter: Mentzel, Norbert, Dipl.-Phys.

(56) Entgegenhaltungen:
- WO-A-86/00679
- BE-A- 699 689
- DE-A- 2 516 833
- DE-A- 3 114 129
- DE-A- 3 831 611
- US-A- 1 817 772
- US-A- 2 586 871

## Beschreibung

Die Erfindung richtet sich auf eine Vorrichtung der im Oberbegriff des Anspruches 1 angegebenen Art. Solche Vorrichtungen kommen bei Übergängen zwischen einem Außenrohr aus Kunststoff und einem Innenrohr aus Metall vor. Sie ergeben sich insbesondere bei sogenannten "Hauseinführungen", die eine Wand eines Gebäudes durchsetzen. Dabei ist das aus Kunststoff bestehende Außenrohr an eine auf der Außenseite des Gebäudes angeordnete Versorgungsleitung für Gas oder Wasser angeschlossen, die ebenfalls aus Kunststoff besteht, während das metallische Innenrohr mit innerhalb des Gebäudes weitergeführten metallischen Leitungen verbunden ist.

Bei der bekannten Vorrichtung dieser Art (WO 86/00679) kommt es auf eine Dichtung zwischen einer Muffe und einem Rohr an. Dafür sind zwei unterschiedliche Materialien erforderlich, nämlich ein Hauptteil aus nicht elastischem Kunststoff und ein Nebenteil aus elastischem Kunststoff. Der Nebenteil ist axial zwischen dem Hauptteil angeordnet und besitzt Dichtungslippen, die sich radial zwischen die Abschnitte des Hauptteils erstrecken. Die Herstellung und Handhabung dieser Vorrichtungen sind umständlich und verteuern das Produkt.

Bei einer anderen bekannten Vorrichtung (DE 38 31 611 A1) wird das Außenrohr zunächst als Vorprodukt durch Spritzgießen aus Kunststoff hergestellt und erst danach eine oder mehrere Ringnuten im Rohrinneren eingefräst, in die dann eine ringförmige Dichtung jeweils eingelegt wird. Erst dann ist das Außenrohr fertiggestellt, um es über das metallische Innenrohr zu ziehen. Das ist ein verhältnismäßig kostenaufwendiger, umständlicher Vorgang. Die Fräswerkzeuge müssen nämlich durch die Rohröffnung eingeschnitten werden, ohne daß der Ablauf des Schneidvorgangs optisch verfolgt werden könnte. Dadurch können sich fehlerhafte Ringnuten ergeben, welche die Abdichtung der beiden ineinandergesteckten Rohre beeinträchtigen.

Der Erfindung liegt die Aufgabe zugrunde, eine preiswerte Vorrichtung der im Oberbegriff des Anspruches 1 genannten Art zu entwickeln, die sich bequem und schnell herstellen läßt und eine fehlerfreie Ausbildung der Ringnut an der gewünschten Stelle garantiert. Dies wird erfindungsgemäß durch die im Kennzeichen des Anspruches 1 angeführte Maßnahme erreicht, welcher folgende besondere Bedeutung zukommt.

Die Erfindung geht gegenüber dem letztgenannten Stand der Technik den umgekehrten Weg, indem sie zunächst durch Kuppeln der gestuften Ringeinsätze die Ringnut für die Dichtung ausbildet, bevor sie das Rohr aus gieß- und/oder preßfähigem Material erzeugt. Die zur Ausbildung der Ringnut dienenden Ringeinsätze werden dann Bestandteil der Rohrwand. Dadurch ist nicht nur die Form, sondern auch die Lage der Ringnut bzw. der Ringnuten in dem sie aufnehmenden Rohr exakt vorbestimmt. Die Nutform ergibt sich durch die vorgefertigten Ringeinsätze, deren Ausbildung vor dem Kuppeln mit dem Auge erfaßt bzw. mit Meßwerkzeugen bequem überprüft werden kann. Die Lage der Nut ergibt sich in streng reproduzierbarer Weise durch die miteinander gekuppelten Ringeinsätze und deren axiale Stufenlängen. Der Zusammenhalt der Ringeinsätze wird durch die Schnappverbindung ihrer in Eingriff kommenden Schliel3hälften gesichert; das Einströmen des gieß- und/oder preßfähigen Rohrmaterials bei der nachträglichen Rohrherstellung kann die Ringeinsätze nicht mehr außer Eingriff bringen. Nach dem Gießen oder Pressen des Rohrmaterials ist das Rohr bereits fertiggestellt und bedarf keiner Nachbearbeitung im Rohrinneren. Weil die Nutform und Nutlage durch die gekuppelten Ringeinsätze von vornherein vorgegeben ist, können die ringförmigen Dichtungen sogar beim Kuppeln der Ringeinsätze bedarfsweise schon in die Ringnuten eingelegt werden. Gegenüber dem erstgenannten Stand der Technik ergibt sich der Vorteil, daß hier im Kupplungsfall der Axialabstand unmittelbar zur Aufnahme der Dichtung dient. Die Anordnung der Dichtung erfolgt durch Kuppeln der beiden Abschnitte, was herstellungsmäßig und montagemäßig schnell und präzise auszuführen ist.

Diese Ringeinsätze können auch dazu verwendet werden, um zugleich Kammern für Befestigungselemente zwischen den Rohren, z.B. für einen Sprengring, zu bilden. Von besonderem Vorteil ist es dabei, ein solches für den Zusammenhalt der ineinander gesteckten Rohre sorgendes Befestigungselement, gemäß Anspruch 9, - in Einsteckrichtung der beiden Rohre gesehen - grundsätzlich hinter den Ringnuten anzuordnen. Die Befestigungselemente bestehen aus Stahl und stehen unter einer radialen Kraft, die sie in eine vorbereitete Rille des anderen Rohres drückt, wenn die volle Einstecklage erreicht ist. Dadurch erzeugt das Befestigungselement beim Ineinanderstecken der Rohre Riefen am anderen Rohr, die später zu Leckagen führen können, weil die Dichtungen die Riefen nicht einwandfrei ausfüllen können. Wenn aber die Ringnuten, gemäß Anspruch 9, hinter dem Befestigungselement liegen, kommen sie stets an jenen Axialbereichen des einzuführenden Rohres in Berührung, die noch nicht durch das Befestigungselement hindurchgeführt worden sind. Dadurch ergibt sich eine besonders wirkungsvolle Abdichtung der radialen Fuge zwischen den beiden ineinander gesteckten Rohren.

Weitere Maßnahmen und Vorteile der Erfindung ergeben sich aus den Unteransprüchen, der nachfolgenden Beschreibung und den Zeichnungen. Die Erfindung richtet sich auf alle daraus entnehmbaren neuen Merkmale und Merkmalskombinationen, auch wenn diese nicht ausdrücklich in den Ansprüchen angeführt sein sollten. In den Zeichnungen ist die Erfindung in einem Ausführungsbeispiel dargestellt. Es zeigen:
- Fig. 1: ein Teilstück der beiden mit der erfindungsgemäßen Vorrichtung versehenen, ineinander gesteckten Rohr,
- Fig. 2,: in Explosionsdarstellung und in Vergrößerung, die zur Ausbildung dieser Dichtungsvorrichtung dienenden Bauteile vor ihrer axialen Kupplung, und
- Fig. 3: einen alternativen radialen Querschnitt für eine bei der Vorrichtung verwendbare ringförmige Dichtung.

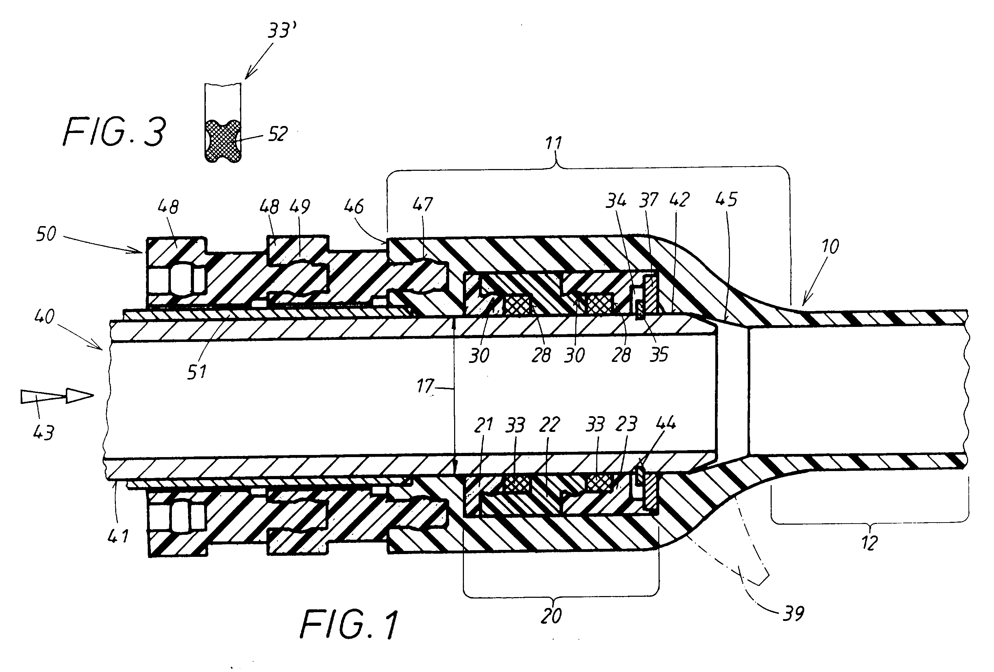

Fig. 1 zeigt die Anwendung der erfindungsgemäßen Vorrichtung bei einer sogenannten Hauseinführung, die aus einem Kunststoffrohr 10 mit einem endseitigen Muffenteil 11 und aus einem metallischen Innenrohr 40, vorzugsweise aus Stahl, besteht. Es handelt sich dabei um das sogenannte "Spitzende" einer Hauseinführung. Der Muffenteil 11 bildet das eigentliche Außenrohr, während der sich daran anschließende Rohrabschnitt 12 ähnliche Rohrdimensionen wie das in den Muffenteil 11 einzusteckende Innenrohr 40 aufweist. Es versteht sich, daß die erfindungsgemäße Vorrichtung auch bei anderen Rohrverbindungen angewendet werden könnte, die aus ineinander steckbaren Innen- und Außenrohren bestehen.

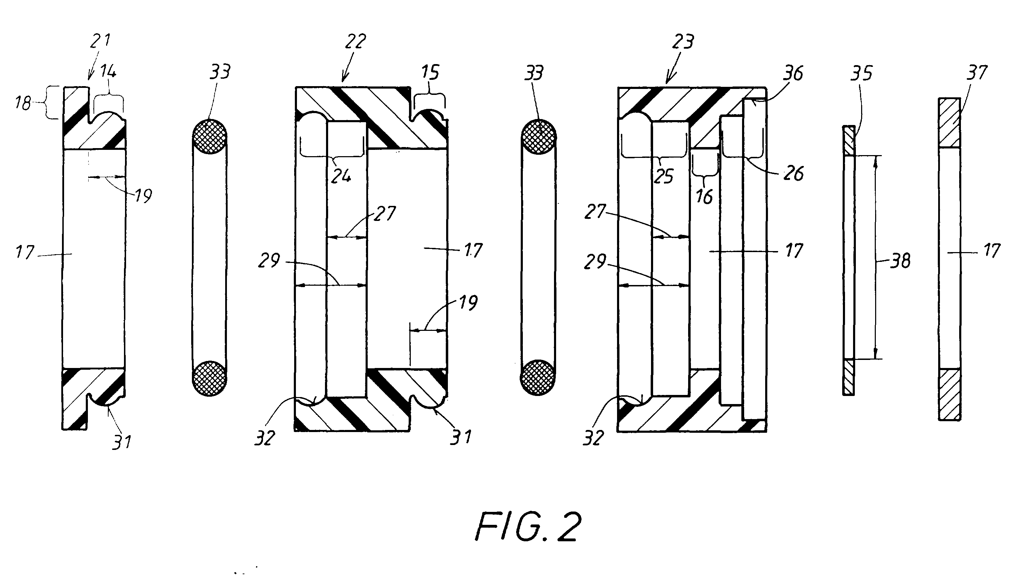

Die Muffe 11 beinhaltet eine Kammer 13, welche durch eine in sich vormontierbare Baueinheit 50 aus in sich axial gestuften Ringeinsätzen 21, 22, 23 erzeugt ist. Das Aussehen des Stufenprofils dieser Ringeinsätze 21 bis 23 ist aus Fig. 2 zu erkennen. Im Axialquerschnitt gesehen hat das Stufenprofil des ersten Ringeinsatzes 21 L-Form, dasjenige des zweiten Ringeinsatzes 22 Z-Form und schließlich könnte das Stufenprofil des dritten Ringeinsatzes 23 als T-Form bezeichnet werden. Die sich dabei ergebenden achsparallelen Schenkel dieser drei Formenen sind außerdem noch in sich profiliert und lassen sich in zwei unterschiedliche Gruppen 14, 15 und 24, 26 gliedern.

Alle Ringeinsätze 21 bis 23 besitzen eine übereinstimmende lichte Weite 17, die, wie aus Fig. 1 zu erkennen ist, den Durchmesser 17 der fertigen Muffe 11 bestimmt. Diejenigen Schenkel 14, 15, 16 des Stufenprofils, welche die lichte Muffenweite 17 bestimmen, sollen wegen ihrer maximalen radial innen liegenden Position nachfolgend als "Innenstufe" bezeichnet werden. Die Innenstufen 14, 15 der Ringeinsätze 21, 22 besitzen die eine Schließhälfte 31 einer in Fig. 1 erkennbaren Schnappverbindung 30, die durch die eigenelastischen Wirkungen des zur Herstellung der Ringeinsätze 21 bis 23 dienenden Werkstoffs sich ergibt. Die Schnappverbindung 30 wirkt wie ein Druckknopf, der eine patrizenförmige und eine matrizenförmige Schließhälfte besitzt. Die Schließhälften 31 der beiden Innenstufen 14, 15 sind im vorliegenden Fall patrizenförmig gestaltet und bestehen aus einer koaxialen Ringwulst. Die Ringeinsätze 21 bis 23 bestehen aus einem Kunststoff mit größerer Festigkeit, als er für die Herstellung des später die Muffe 11 bildenden Kunststoffrohres 10 besitzt. Es wird ein besonders wärme-resistenter Kunststoff verwendet, und zwar vorzugsweise POM. Für das später zu erzeugende Kunststoffrohr 10 wird dagegen PEHD verwendet.

Die Ringeinsätze 21 bis 23 besitzen auch von der Muffenöffnung 17 radial entfernte Schenkel 24, 25 und letztlich auch 26, die nachfolgend kurz "Außenstufen" ihres jeweiligen Stufenprofils bezeichnet werden sollen. In ihrem Endbereich besitzen die Außenstufen 24, 25 der beiden Ringeinsätze 22, 23 komplementäre Schließhälften 32, die hier aus radial nach innen weisenden umlaufenden Rinnen bestehen, also die matrizenförmigen Schließhälften der jeweiligen Schnappverbindung 30 erzeugen. Durch axialen Druck sind folglich die drei Ringeinsätze 21, 22, 23 ineinanderschnappbar und bilden dann eine vormontierte Baueinheit 20 gemäß Fig. 1.

Die Innenstufen 14, 15 der Ringeinsätze 21, 22 besitzen eine kürzere axiale Länge 19, als der axialen Länge 29 der zugehörigen Außenstufen 24, 25 der beiden Ringeinsätze 22, 23 entspricht. Zwischen den radialen Stufenenden verbleibt daher im Kupplungsfall ein in Fig. 2 durch die Differenzstrecke 27 verdeutlichter Axialabstand, der, im Kupplungsfall, gemäß Fig. 1, zwei Ringnuten 28 entstehen läßt. In diese Ringnuten 28 kann dann eine ringförmige Dichtung 33 eingelegt werden, die im Einsteckfall, gemäß Fig. 1, an der Mantelfläche 41 des Innenrohres 40 dichtwirksam ist. Dadurch wird die Fuge 42 zwischen der Muffenöffnung 17 des Kunststoffrohres 10 und dem Innenrohr 40 mediendicht verschlossen. Das Kunststoffrohr 10 wird in folgender neuer Verfahrensweise hergestellt.

Aus den Ringen 21 bis 23 wird zunächst durch das beschriebene axiale Kuppeln die Baueinheit 20 erzeugt. In manchen Fällen können dabei auch schon die ringförmigen Dichtungen 33 beim Kupplungsvorgang in die Axialabstände 27 eingelegt werden. Normalerweise wird man aber die aus elastomerem Material bestehenden Dichtungen 33 erst abschließend in die erzeugten Nuten 28 einbringen. Der dritte T-förmige Ringeinsatz 23 hat noch eine weitere Funktion, nämlich in der aus Fig. 1 ersichtlichen Baueinheit 20 eine Radialkammer 34 für einen Sprengring 35 zu bilden. Dazu ist die jenseits des T-Stegs 16 des in sich gestuften Ringeinsatzes 23 befindliche Außenstufe 26 nochmals in sich gestuft und erzeugt eine endseitige Ringöffnung 36 zur Aufnahme einer metallischen Ringscheibe 37. Während die Ringscheibe 37 ein der erwähnten Muffenöffnung 17 entsprechendes Zentralloch besitzt, ist der Innendurchmeser 38 des Sprengrings 35 natürlich kleiner. Die Ringscheibe 37 schließt die Baueinheit 20 zum Muffeninneren ab und ein vertikaler L-Schenkel 18 des ersten Ringeinsatzes 21 begrenzt sie zur Muffen-Öffnung hin ab.

Diese mit Sprengring 35 und Ringscheibe 37 versehene Baueinheit 20 der Ringeinsätze 21 bis 23 wird nun auf einen Kern in einer Spritzgußform aufgesteckt, die zur Herstellung des mit der Muffe 11 versehenen Kunststoffrohres 10 dient. Die Angußstelle kann an der strichpunktiert in Fig. 1 angedeuteten Zone 39 liegen. Die einströmenden Kunststoffmassen fließen über die Baueinheit 20 und gelangen nicht in die bereits fertigen Ringnuten 28 hinein, weil die Ringeinsätze 21 bis 23 durch ihre miteinander gekuppelten Schnappverbindungen 30 dicht zusammengehalten werden. Obwohl im vorliegenden Fall eine analoge Schnappverbindung zwischen der Ringscheibe 37 und dem Ringeinsatz 23 fehlt, wird die Ringscheibe 37 durch den Flüssigkeitsstrom sicher in die vorbeschriebene Ringaufnahme 36 des letzten Ringeinsatzes 23 eingedrückt. Nach dem Aushärten des Kunststoffmaterials kann die Spritzgußform geöffnet werden; das Kunststoffrohr 10 mit seinem Muffenteil 11 und den darin integrierten Ringnuten 28 für die Dichtungen 33 ist dann bereits fertiggestellt. An der Stirnfläche 46 vom Muffenteil wird im vorliegenden Fall eine koaxiale Ringnut 47 erzeugt, die für die abschließend noch zu nennenden Zwecke dient.

Im Gebrauchsfall wird nun in den Muffenteil 11 eines solchen Kunststoffrohres 10 das metallische Innenrohr 40 im Sinne des Pfeils 43 von Fig. 1 eingesteckt. Um das Außereingriffkommen der beiden Rohre 10, 40 zu verhindern, ist eine Rohrverbindung vorgesehen. Ein Bestandteil dieser Rohrverbindung ist der Sprengring 35. Ihm ist in der Mantelfläche 41 des Innenrohres 40 eine umlaufende Rille 44 zugeordnet. Das Innenrohr 40 besitzt eine Einführschräge 45, die beim Einstecken 43 in die Zentralöffnung des Sprengrings 35 einfährt und diesen aufweitet, während er in der Kammer 34 gefangen bleibt. Der Sprengring 35 steht dann unter einer ihn radial zusammendrückenden Federbelastung, bis er in die Rille 44 des Innenrohres 40 unter Entspannung seiner Federkraft einfahren kann. Dann ist ein Zusammenhalt zwischen den beiden Rohren 10, 40 gewährleistet.

Bedeutsam ist, daß der zur Rohrbefestigung dienende Sprengring 35 am inneren Ende der Muffe 11 liegt. Das bedeutet, daß - in Einsteckrichtung 43 gesehen - die zur Aufnahme der Dichtungen 33 dienenden Ringnuten 28 hinter der den Sprengring 35 aufnehmenden Kammer 34 angeordnet sind. Dadurch kommen die Dichtungen 33 in jenen Axialzonen des Innenrohres 40 zu liegen, die grundsätzlich nicht durch die Ringöffnung des Sprengrings 35 hindurchfahren mußten und daher völlig glatt sind. Das fördert die Dichtigkeit zwischen den beiden Rohren 10, 40.

Das metallische Innenrohr 40 der vorliegenden "Hauseinführung" wird in der Regel mit einem Schutzmantel 50 versehen, der im vorliegenden Fall aus einer Schar von miteinander gekuppelten Ringkörpern 48 besteht. Die Ringkörper 48 sind jeweils mit als Schnappverbindungen dienende Ringnuten 47 und Rohrstutzen 49 an ihren beiden Enden versehen. Diese dienen, wie auch die bereits oben erwähnte Ringnut 47 am Stirnende 46 der Muffe 11, zur druckknopfartigen Verbindung der Ringkörper 48 untereinander und erzeugen so einerseits einen Schutzmantel 50 und sorgen für eine dichte Verbindung des Schutzmantels 50 mit dem Muffenteil 11 des Kunststoffrohres 10. Der vormontierte Mantel 50 wird durch Erwärmung auf das Innenrohr 40 aufgeschrumpft. Dazu ist auf dem Metallrohr 10 eine Kontaktschicht 51, aus PE vorgesehen, die für eine gute Haftung des Schutzrohres 50 sorgen.

Fig. 3 zeigt einen axialen Schnitt durch eine alternative Ausbildung 33' der ringförmigen elastomeren Dichtung. Während diese im bisherigen Ausführungsbeispiel einen aus Fig. 2 ersichtlichen Kreisquerschnitt besaß, ist die Dichtung 33' von Fig. 3 unrund ausgebildet und besitzt einen profilierten quadratischen Querschnitt 52. Dieser Querschnitt 52 erinnert mit seiner Umrißlinie an ein vierblättriges Kleeblatt.

### Bezugszeichenliste:

- 10: Rohr, Kunststoffrohr
- 11: Muffenteil von 10, Außenrohr
- 12: Rohrabschnitt von 10
- 13: Kammer in 11 für 20
- 14: Schenkel, Innenstufe von 21
- 15: Schenkel, Innenstufe von 22
- 16: T-Steg, Innenstufe von 23
- 17: Muffenöffnung, lichte Weite von 21 bis 23
- 18: L-Schenkel von 21
- 19: axiale Länge von 14 bzw. 15
- 20: Baueinheit
- 21: L-förmiger erster Ringeinsatz
- 22: Z-förmiger zweiter Ringeinsatz
- 23: T-förmiger dritter Ringeinsatz
- 24: Schenkel, Außenstufe von 22
- 25: Schenkel, Außenstufe von 23
- 26: Schenkel, Außenstufe von 23
- 27: Axialabstand zwischen Radialflanken von 14, 24 bzw. 15, 25
- 28: Ringnut bei 27
- 29: axiale Länge von 24, 25
- 30: Schnappverbindung
- 31: patrizenförmige Schließhälfte von 30, Ringwulst
- 32: matrizenförmige Schließhälfte, Rinne
- 33: ringförmige Dichtung in 28
- 33': alternative Form von 33 (Fig. 3)
- 34: Radialkammer für 35
- 35: Befestigungselement, Sprengring
- 36: Ringaufnahme in 23 für 37
- 37: endseitige Ringscheibe von 20
- 38: Innendurchmesser von 35
- 39: Material-Angußstelle für 10, 11
- 40: Innenrohr, Stahlrohr
- 41: Mantelfläche von 40
- 42: Fuge zwischen 11, 40
- 43: Einsteckpfeil von 40 in 11
- 44: Rille in 41 für 35 (Rohrbefestigung)
- 45: Einführschräge am Ende von 40
- 46: Stirnfläche von 11
- 47: druckknopfartige Ringnut in 48 bzw. 11
- 48: Ringkörper für 50
- 49: druckknopfartiger Rohrstutzen an 48
- 50: Schutzmantel
- 51: Kontaktschicht auf 40 für 50
- 52: profilierter, quadratischer Querschnitt von 33' (Fig. 3)

## Patentansprüche

1. Vorrichtung zum Abdichten der radialen Fuge zwischen zwei koaxial ineinander gesteckten Rohren (10, 11; 40), von denen wenigstens das eine Rohr (10) aus gieß- und/oder preßfähigem Material besteht und mindestens eine Ringnut (28) für eine Dichtung (33) besitzt,
und im Einsteckfall der beiden Rohre (10, 11; 40), die Dichtung (33) am anderen Rohr (40) dichtwirksam angreift,
wobei das aus gieß- und/oder preßbarem Material bestehende Rohr (10, 11) im Nutabschnitt wenigstens zwei in sich axial gestufte Ringeinsätze (21, 22, 23) aufweist, die zwischen sich ein Paar von zueinander komplementären, miteinander kuppelbaren Schließhälften (31, 32) einer Schnappverbindung (30) aufweisen,
im Kupplungsfall die Ringeinsätze (21, 22, 23) durch den Eingriff ihrer Schließhälften (31, 32) miteinander zu einer Baueinheit (20) verbunden sind,
wobei ferner übereinanderliegende Stufen (14 bis 16, 24 bis 26) benachbarter Ringeinsätze (21 bis 23) eine zueinander unterschiedliche axiale Länge (19, 29) aufweisen und zwischen ihren Stufenenden einen Axialabstand (27) belassen
und das Rohr-Material über die gekuppelten Ringeinsätze (21 bis 23) gegossen und/oder gepreßt ist,
**dadurch gekennzeichnet,**
daß der Axialabstand (27) im Kupplungsfall die Ringnut (28) für die Dichtung (33) erzeugt.

2. Vorrichtung nach Anspruch 1, dadurch gekennzeichnet, daß auch die Ringeinsätze (21 bis 23) aus gieß- und/oder preßfähigem Werkstoff bestehen.

3. Vorrichtung nach Anspruch 1 oder 2, dadurch gekennzeichnet, daß der Werkstoff der Ringeinsätze (21 bis 23) eine größere Festigkeit als das Material des über sie gegossenen und/oder gepreßten Rohres (10, 11) aufweist.

4. Vorrichtung nach einem oder mehreren der Ansprüche 1 bis 3, dadurch gekennzeichnet, daß die Stufe (26) eines Ringeinsatzes (23) mit einem benachbarten Ringteil eine Radialkammer erzeugt, die zur Aufnahme eines Befestigungselements (35) dient
und das Befestigungselement (35) im Einsteckfall die beiden Rohre (10, 11; 40) miteinander verbindet.

5. Vorrichtung nach Anspruch 4, dadurch gekennzeichnet, daß das Befestigungselement ein Sprengring (35) ist, der im Verbindungsfall in eine im anderen Rohr eingelassene Rille (44) eingreift.

6. Vorrichtung nach einem oder mehreren der Ansprüche 1 bis 5, dadurch gekennzeichnet, daß die Dichtung vor dem Gießen und/oder Pressen des zur Herstellung des Rohres (10, 11) dienenden Materials in den Axialabstand (27) zwischen den gekuppelten Ringeinsätzen (21 bis 23) eingelegt ist.

7. Vorrichtung nach einem oder mehreren der Ansprüche 1 bis 6, dadurch gekennzeichnet, daß das aus gieß- und/oder preßfähigem Kunststoff bestehende Rohr (10) einen Muffenteil (11) besitzt, der die Ringeinsätze (21 bis 23) aufnimmt.

8. Vorrichtung nach einem oder mehreren der Ansprüche 4 bis 7, dadurch gekennzeichnet, daß dem Muffenteil des Kunststoff-Außenrohres ein metallisches Innenrohr (40), insbesondere ein Stahlrohr, zugeordnet ist, das im Einsteckfall durch den Sprengring (35) mit dem Muffenteil (11) verbunden ist.

9. Vorrichtung nach einem oder mehreren der Ansprüche 1 bis 8, dadurch gekennzeichnet, daß - in Einsteckrichtung (46) der beiden Rohre (10, 11; 40) gesehen - das Befestigungselement, wie ein Sprengring (35), hinter der bzw. den zur Aufnahme einer Dichtung (33) dienenden Ringnuten (28) angeordnet ist.

## Claims

1. Assembly for sealing the radial joint between two concentric pipes (10, 11; 40) of which at least one pipe (10) is made of castable and/or pressable material and has at least one annular groove (28) for a seal (33),
and, when both pipes (10, 11; 40) are coupled, the seal (33) engages the other pipe (40) to provide effective sealing,
whereby the pipe (10,11) consisting of castable and/or pressable material has in the groove section at least two axially stepped annular inserts (21, 22, 23) which have between them a pair of complementary closing halves (31, 32) of a snap connection (30) which can be coupled together,
and, when the pipes are coupled, the annular inserts (21, 22, 23) are connected to each other to form one structural unit (20) through the engagement of their closing halves (31,32),
whereby, moreover, steps above one another (14 to 16, 24 to 26) of adjacent annular inserts (21 to 23) exhibit different axial lengths (19, 29) and leave an axial space (27) between their step ends,
and the pipe material is cast and/or pressed over the coupled annular inserts (21 to 23),
**characterised in that**
the axial space (27), when the pipes are coupled, generates the annular groove (28) for the seal (33).

2. Assembly according to claim 1, characterised in that the annular inserts (21 to 23) are also made of castable and/or pressable material.

3. Assembly according to claim 1 or 2, characterised in that the material of the annular inserts (21 to 23) has a higher strength than the material of the pipe (10, 11) cast and/or pressed over them.

4. Assembly according to one or more of claims 1 to 3, characterised in that the step (26) of one annular insert (23) generates, together with an adjacent annular part, a radial chamber which serves to accommodate an attachment element (35),
said attachment element (35) joining the two pipes (10, 11; 40) together when they are coupled.

5. Assembly according to claim 4, characterised in that the attachment element is a snap ring (35) which, in the event of connection, engages a groove (44) recessed into the other pipe.

6. Assembly according to one or more of claims 1 to 5, characterised in that, prior to the casting and/or pressing of the material used to manufacturer the pipe (10, 11), the seal is inserted into the axial space (27) between the coupled annular inserts (21 to 23).

7. Assembly according to one or more of claims 1 to 6, characterised in that the pipe (10) made of castable and/or pressable plastic has a sleeve part (11) which accommodates the annular inserts (21 to 23).

8. Assembly according to one or more of claims 4 to 7, characterised in that a metallic inner pipe (40), in particular a steel pipe, is assigned to the sleeve part of the plastic outer pipe, said inner pipe being connected by the snap ring (35) to the sleeve part (11).

9. Assembly according to one or more of claims I to 8, characterised in that - as viewed in the coupling direction (46) of the two pipes (10, 11; 40) - the attachment element, like a snap ring (35), is arranged behind the annular groove(s) (28) serving to accommodate a seal (33).

## Revendications

1. Dispositif de colmatage du joint radial entre deux tubes enfoncés l'un dans l'autre de manière coaxiale (10, 11 ; 40), l'un au moins des tubes (10) étant fabriqué en matériau coulable et/ou pressable et possédant au moins une rainure annulaire (28) pour un joint (33),
et en cas d'enfoncement des deux tubes (10, 11 ; 40), s'appliquant sur le joint (33) de l'autre tube (40) de manière à assurer une étanchéité efficace,
le tube en matériau coulable et/ou pressable (10, 11) présentant, dans la section de la rainure, au moins deux inserts annulaires (21, 22, 23) échelonnés de manière axiale, présentant entre eux une paire de moitiés de fermeture (31, 32) d'assemblage à encliquetage (30), accouplables l'une avec l'autre et complémentaires l'une par rapport à l'autre,
en cas d'accouplement, les inserts annulaires (21, 22, 23) étant reliés pour former un sous-groupe (20), de par l'engrènement de leurs moitiés de fermeture (31, 32),
les échelons superposés (14 à 16, 24 à 26) d'inserts annulaires voisins (21 à 23) présentant une longueur axiale variant de l'un à l'autre (19, 29) et laissant un écartement axial (27) entre leurs extrémités d'échelons,
et le matériau de tubes situé au-dessus des inserts annulaires (21 à 23) accouplés étant coulé et/ou pressé,
**caractérisé par le fait**
que l'écartement axial (27) en cas d'accouplement produit la rainure annulaire (28) pour le joint (33).

2. Dispositif selon la revendication 1, caractérisé par le fait que les inserts annulaires (21 à 23) sont en matériau coulable et/ou pressable.

3. Dispositif selon la revendication 1 ou 2, caractérisé par le fait que le matériau des inserts annulaires (21 à 23) présente une plus grande solidité que le matériau du tube (10, 11) coulé et/ou pressé sur eux.

4. Dispositif selon une ou plusieurs des revendications 1 à 3, caractérisé par le fait que l'échelon (26) d'un insert annulaire (23) produit, avec un composant annulaire voisin, une chambre radiale servant à accueillir un élément de fixation (35)
et l'élément de fixation (35) reliant les deux tubes (10, 11 ; 40) en cas d'enfoncement.

5. Dispositif selon la revendication 4, caractérisé par le fait que l'élément de fixation est un circlip (35) qui, en cas de raccordement, s'engrène dans une rainure (44) emboîtée dans l'autre tube.

6. Dispositif selon une ou plusieurs des revendications 1 à 5, caractérisé par le fait que le joint est inséré dans l'écartement axial (27) situé entre les inserts annulaires accouplés (21 à 23) avant le coulage et/ou le pressage du matériau servant à fabriquer le tube (10, 11).

7. Dispositif selon une ou plusieurs des revendications 1 à 6, caractérisé par le fait que le tube (10) en plastique coulable et/ou pressable possède une pièce à manchon (11) accueillant les inserts annulaires (21 à 23).

8. Dispositif selon une ou plusieurs des revendications 4 à 7, caractérisé par le fait que l'on affecte à la pièce à manchon du tube extérieur en plastique un tube intérieur métallique (40), plus exactement un tube en acier qui, en cas d'enfoncement, est relié par le circlip (35) à la pièce à manchon (11).

9. Dispositif selon une ou plusieurs des revendications 1 à 8, caractérisé par le fait que, vu dans la direction d'enfoncement (46) des deux tubes (10, 11 ; 40), l'élément de fixation est agencé comme un circlip (35), derrière le ou les rainures annulaires (28) servant à accueillir un joint (33).
